Europäisches Patentamt

European Patent Office

Office européen des brevets

(11) Publication number: **0 249 944 B1**

# EUROPEAN PATENT SPECIFICATION

(45) Date of publication of patent specification: **09.11.94** (51) Int. Cl.5: **C08K 5/00**, B01J 31/00

(21) Application number: **87108651.8**

(22) Date of filing: **16.06.87**

(54) **Platinum-alkenylsiloxane complex catalyst composition.**

(30) Priority: **17.06.86 JP 141098/86**

(43) Date of publication of application:
**23.12.87 Bulletin 87/52**

(45) Publication of the grant of the patent:
**09.11.94 Bulletin 94/45**

(84) Designated Contracting States:
**DE FR GB**

(56) References cited:
EP-A- 0 110 370      EP-A- 0 169 365
GB-A- 2 056 995      GB-A- 2 184 727
US-A- 3 715 334      US-A- 3 814 730

Mc Graw-Hill Encyclopedia of Chemistry,
USA 1983, pp.9-11 and 777

K.K. Unger, Porous Silica, Elsevier 1979, pp.
83-96, 113, 114, 130-133

D.H. Solomon and D.G. Hawthorne, Chemistry of pigments and filllers, pp. 44, 45,
85-88, 124-134

Hair M.L., J. Phys. Chem., 74(1970)91

(73) Proprietor: **Toray Silicone Company, Ltd.**
**8, 2-chome Muro-machi**
**Nihonbashi**
**Chuo-ku Tokyo 103 (JP)**

(72) Inventor: **Saruyama, Toshio**
**3-11, Tsudanuma**
**Narashino-shi Chiba Prefecture (JP)**

(74) Representative: **Spott, Gottfried, Dr. et al**
**Patentanwälte Spott und Puschmann**
**Sendlinger-Tor-Platz 11**
**D-80336 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a platinum-alkenylsiloxane complex catalyst composition which finds utility as a hydrosilylation reaction catalyst. More particularly, the present invention relates to an improved platinum-alkenylsiloxane complex catalyst composition for which the catalytic activity of the platinum-alkenylsiloxane complex does not change during long-term storage of the composition.

The hydrosilylation reaction involves addition of an organohydrogensiloxane across an unsaturated bond, for example, a carbon-to-carbon double bond. Compared with peroxide-based curing reactions and curing reactions involving the condensation of silicon-bonded hydrolyzable groups with silanol groups, the hydrosilylation reaction offers the advantages of a high curing activity and no reaction by-products. As a consequence, it is widely utilized as the curing reaction in curable organopolysiloxane compositions.

Various transition metal compounds are known in the art as catalysts for hydrosilylation reactions, platinum compounds being the most widely utilized class of catalysts. Among these platinum compounds, chloroplatinic acid-alkenylsiloxane complexes are known to have high catalytic activity (for example, refer to U.S. Patent No. 3,419,353, which issued to Willing on Dec. 31, 1968).

Also known are catalyst compositions in the form of pastes prepared by blending an organopolysiloxane and microparticulate hydrophilic silica together with a chloroplatinic acid-alkenylsiloxane complex. These paste compositions are widely used because they are easy to add and blend into curable organopolysiloxane compositions and thus are easy to use.

A shortcoming of platinum-alkenylsiloxane complexes is their relatively poor stability. These compositions readily convert into platinum black with a resulting decline in catalytic activity. In particular, compositions containing both microparticulate hydrophilic silica and a platinum-alkenylsiloxane complex suffer from the problem of a substantial decrease in catalytic activity with time.

EP-A 0 169 365 discloses a composition comprising an organopolysiloxane, a catalyst, for example a platinum catalyst, and an inorganic filler. The filler can be a wet-method or dry-method silica. The filler should be modified, preferably with silazanes. This treatment leads to a hydrophobic silica.

GB-A 2 056 995 teaches silane-filler preparations which consist of 5 to 70 % by weight of a silane and of 95 to 30 % by weight of an inorganic filler. The inorganic filler is for example Ultrasil or Nipsil, that is silicas having a $pK_a$ value between 0.8 and 1.5.

Moreover it is known from K.K. Unger, porous silica, Elsevier 1979, pp. 83-96, 113-114 and 130-133, that the $pK_a$-value of normal silicas is in the range of about 7.

The present inventor carried out various investigations in order to solve the aforementioned problem, and the present invention was developed as a result.

The object of the present invention is to provide a platinum-alkenylsiloxane complex catalyst composition for which the hydrosilylation reaction catalytic activity of the platinum-alkenylsiloxane complex is not subject to variation as a function of time.

The objective of this invention is achieved by adjusting the acidity of the catalyst composition to a value such that a specified mixture of catalyst and microparticulate silica dispersed in a non-polar liquid has a $pK_a$ value within the range from 2.0 to 9.0.

This invention provides an improved platinum-alkenylsiloxane complex catalyst composition of

A) 100 parts by weight of an organopolysiloxane,

B) from 1 to 100 parts by weight of a microparticulate hydrophilic silica, and

C) from 0.0001 to 100 parts by weight, as atomic platinum, of a platinum-alkenylsiloxane complex,

characterized in that the $pK_a$ value of a dispersion of 100 parts by weight said silica, from 10 to 100 parts by weight, calculated as atomic platinum, of said complex, and an aprotic solvent, is within the range of from 2.0 to 9.0 inclusive and wherein said $pK_a$ value is achieved by treatment of a silica with alkaline materials or by addition of an alkaline material as a fourth component.

By way of explanation of the preceding, the organopolysiloxane, component (A) functions to make the platinum-alkenylsiloxane complex, component (C), easy to use, and it also functions as a stability improver and diluent for component (C).

The organopolysiloxane ingredient referred to herein as component (A) can be any of the organopolysiloxanes known in the art. The molecular configuration of this ingredient can be straight chain or branched chain so long as the ingredient has the siloxane-chain skeleton. Other than the oxygen atoms forming part of the siloxane bond and the absence of silicon bonded hydrogen atoms, there is no particular restriction on the groups bonded to silicon in said organopolysiloxanes. These groups include but are not limited to alkyl radicals such as methyl, ethyl, propyl, and n-octyl; alkenyl radicals such as vinyl and allyl; aryl radicals groups such as phenyl and naphthyl; cycloalkyl radicals such as cyclohexyl and cycloheptyl; haloalkyl radicals such as 3-chloropropyl and 3,3,3-trifluoropropyl; aralkyl radicals such as 2-phenylethyl

2

EP 0 249 944 B1

and 2-phenylpropyl; and organofunctional groups which are bonded through divalent hydrocarbon radicals, for example, gamma-glycidoxypropyl and gamma-methacryloxypropyl.

The molecular weight of the organopolysiloxane ingredient is not specifically restricted, and may range from that of the dimer up to molecular weights in excess of 1,000,000. Furthermore, the organopolysiloxane may be used in the form of the mixture of two or more species.

From the standpoint of the relevant properties, fluid organopolysiloxanes, ranging from liquids up to gums, are preferred. Among these, organopolysiloxanes having at least 2 silicon-bonded alkenyl groups in each molecule and a degree of polymerization no greater than 10 are preferred because such organopolysiloxanes have a substantial effect in improving the stability of platinum-alkenylsiloxane complexes.

The microparticulate silica filler, referred to herein as component (B), imparts a suitable consistency or thixotropy to the present catalyst compositions, and its addition serves to provide a suspension, paste or plastic material, and thus to provide the catalyst composition in an easy-to-use form. When the present catalyst composition is used to catalyze a composition with a substantial concentration of a non-siloxane component, component (B) then also functions as a mixing improver.

Microparticulate silicas can generally be divided into two types, based on their method of production. One type is known as fumed silica or dry-method silica, and is produced by the reaction of tetrachlorosilane in an oxyhydrogen flame. The other type of silica is referred to as wet-method silica, and is produced by reacting sodium silicate, also referred to as water glass, with acid and then removing the water and salt. Both dry-method and wet-method silicas can be used in the present invention. Wet-method silica is in general to be preferred because its use provides a more stable composition.

Component (B) is present at a concentration of from 1 to 100 parts by weight per 100 parts by weight of component (A). Less than 1 part by weight is undesirable because the catalyst composition will not have the form of a suspension, paste or plastic, and thus will not be easy to use. Exceeding 100 parts by weight of silica is undesirable because a homogeneous mixture with component (A) cannot then be obtained.

The platinum-alkenylsiloxane complex, referred to herein as component (C) is the hydrosilylation reaction catalyst. This ingredient is a platinum complex in which an alkenyl-substituted siloxane is coordinated with platinum. Platinum-alkenylsiloxane complexes are described, for example, in U.S. Patent No. 3,419,353, which issued to Willing on Dec. 31, 1968; however, the present catalyst compositions can contain any platinum complex which has been produced by the reaction of haloplatinic acid or a haloplatinate salt with an alkenylsiloxane and which also is catalytically active in the hydrosilylation reaction.

The structure of the alkenylsiloxane starting material for component (C) is not specifically restricted. This reactant preferably contains at least 2 alkenyl groups in each molecule. Most preferably, the alkenyl groups are bonded to 2 silicon atoms that are, in turn, bonded to the same oxygen atom, because this will improve the stability of the obtained platinum-alkenylsiloxane complex itself.

The concentration of component (C) is from 0.0001 to 100 parts by weight, calculated as atomic platinum, per 100 parts by weight of component (A). A catalytic effect in the hydrosilylation reaction is essentially absent at concentrations below 0.0001 parts by weight, while a homogeneous mixture with components (A) and (B) cannot be obtained when the concentration of component (A) exceeds 100 parts by weight.

The unique feature that characterizes the present compositions is their acid strength, expressed as a $pK_a$ value. This value is between 2.0 and 9.0, and is measured using a dispersion of components (B) and (C) in a non-polar solvent. The dispersion contains 100 parts by weight of component (B) and from 10 to 100 weight parts, as atomic platinum, of component (C). The activity of the present compositions as hydrosilation catalysts will substantially decline when the $pK_a$ falls below 2.0, and the catalytic activity will occasionally decline when the upper limit of 9.0 is exceeded.

Measurement of the $pK_a$ value in a nonpolar solvent is a necessary condition in the present invention. While the acid strength of silica is usually measured using an aqueous dispersion or a water-alcohol mixed solvent as the dispersion vehicle, a determination of long-term catalytic activity for the present compositions cannot be determined using such measurement methods.

While it is true that platinum-alkenylsiloxane compexes are not miscible with water or water-alcohol mixtures, the reason for measuring the $pK_a$ value in a non-polar solvent is that this value measured in water or water-alcohol mixtures does not correlate with the stability of platinum-alkenylsiloxane complexes in the presence of both the organopolysiloxane and silica components of the present compositions.

As used herein, the term "non-polar" denotes the absence of dissociable, active hydrogen atoms. Aromatic hydrocarbons such as benzene and toluene and saturated hydrocarbons such as cyclohexane and n-heptane are solvents which satisfy this condition. Benzene or cyclohexane are optimal for conducting definitive measurements.

3

The $pK_a$ value is not measured using an actual catalyst composition of this invention, but rather is measured on the dispersion in non-polar solvent of the microparticulate hydrophilic silica and platinum-alkenylsiloxane complex. Also, the weight ratio in which the components (B) and (C) are present for measurement of the $pK_a$ value is different from the ratio in which these components are present in the catalyst compositions of this invention.

The $pK_a$ value is measured using from 10 to 100 parts by weight of component (C), expressed as atomic platinum, and 100 parts by weight of component (B). When the quantity of component (C) in compositions used to determine $pK_a$ values is less than 10 parts by weight, based on atomic platinum, a correlation between these values and storage stability of the actual catalyst composition of this invention cannot be made. Even if the $pK_a$ value falls within the range of from 2.0 to 9.0 the hydrosilylation catalytic activity of the platinum-alkenylsiloxane complex in the actual composition will still decline with time.

The acid strength of the present compositions is expressed in terms of their $pK_a$ values. These values encompass not only the acid region, but also the alkaline region at pKa values greater than 7.0.

The range within which the acid strength of a given catalyst composition lies can be determined from the color of indicators, that is, 2-amino-5-azotoluene can be used as an indicator with a transition pKa value of 2.0, and Thymol blue can be used as an indicator with a transition pKa value of 9.0. The acid strength is determined by the addition of several drops of a solution containing from 0.05 to 0.1 weight % of the indicator.

When more exact $pK_a$ measurements are desired, a narrow-range mixed indicator and the visible absorption spectrum can be used in combination. However, the object of the present invention is satisfactorily achieved using the aforementioned less precise method for range determination of the $pK_a$ value.

The catalyst composition of this invention can be prepared by mixing the organopolysiloxane comprising component (A), the microparticulate hydrophilic silica comprising component (B) and the platinum-alkenylsiloxane complex comprising component (C), and optionally a fourth component described below. The order of mixing, mixing temperature, mixing pressure, and shear conditions are not specifically restricted.

Because the $pK_a$ value of a dispersion of components (B) and (C) measured under the conditions described in this specification is generally less than 2.0, this value will require adjustment by addition of an alkaline material as a fourth component, or by treating the microparticulate silica, component (B), with alkaline materials that include but are not limited to alkali metals, alkaline earth metals, and calcium salts of higher aliphatic carboxylic acids.

Specific examples of alkaline materials that can be added to the present compositions as the aforementioned fourth component are alkali metal siloxanes such as potassium silanolate and sodium silanolate, and alkali metal alcoholates such as potassium butoxide and sodium ethoxide.

As necessary, crepe-hardening inhibitors, non-organopolysiloxane polymers, organic solvents, crosslinking inhibitors, thermal stabilizers such as iron oxide and rare earth compounds, flame retardants such as manganese carbonate and fumed titanium dioxide, as well as quartz powder, diatomaceous earth, calcium carbonate, glass fiber, and carbon black, etc., can optionally be blended into the composition of the invention unless the ingredient adversely affects the object of the invention, specifically the initial or long term activity of the catalyst composition.

The platinum-alkenylsiloxane complex catalyst composition produced as described in this specification can be used in paste, plastic or dispersion form as a hydrosilyation reaction catalyst. For example, in the case of curable organopolysiloxane compositions, a cured material will be obtained by adding the composition of the present invention to a composition which contain at least one organopolysiloxane having at least two ethlenically unsaturated hydrocarbon radicals, for example, alkenyl radicals, in addition to at least one organopolysiloxane having silicon-bonded hydrogen atoms.

The present catalyst compositions can also be used as curing catalysts for non-organopolysiloxane polymer compositions. Furthermore, the composition of the present invention can be used as a flame retardant for various silicone rubbers.

The following examples describe preferred embodiments of the present hydrosilation catalyst compositions, and should not be interpreted as limiting the scope of the invention described in the accompanying claims. Unless otherwise indicated, all parts and percentages are by weight and viscosity measurements were performed at 25 degrees C.

The acid strength ($pK_a$ values) of components (B) and (C) dispersed in a nonpolar solvent were measured as follows:

A plurality of test tubes were prepared by placing 0.1 g of microparticulate hydrophilic silica and 5 cc of benzene in each tube. A 0.5 g portion of a platinum-vinylsiloxane complex prepared as described in Reference Example 2 below was added, and the contents of the tube were mixed to homogeneity. The $pK_a$ value was measured by observing the color produced upon addition of an indicator solution for $pK_a$ measurement. The concentration of the indicator solution was from 0.05 to 1.0% in benzene.

The quantity of addition of platinum-vinylsiloxane complex was assumed to be 0.5 g because it had been confirmed in the above procedure that the $pK_a$ value for any microparticulate silica assumed a constant value following addition of 0.3 g platinum-vinylsiloxane complex A. Also, the silica precipitated upon standing during the measurement procedure, and in some cases the solution had a different color from the precipitated silica. In these cases, the color of the precipitated silica was evaluated.

Reference Example 1 - Adjustment of the $pK_a$ values of microparticulate hydrophilic silicas

30.0 g of wet-method silica (Nipsil LP from Nippon Silica Kogyo Kabushiki Kaisha) were dispersed in 500 g water and 200 cc of 0.1 N aqueous sodium hydroxide were added. The resultant mixture was stirred for one hour, after which it was filtered and then dried for 6 hours at 150 degrees C. The resulting solid cake was ground up and then passed through a 200 mesh filter to yield a microparticulate silica referred to as silica A in the following examples.

Silica B was prepared in an identical manner to silica A, but using 400 cc of 0.1 N aqueous sodium hydroxide.

Silica C was prepared by dispersing 30.0 g dry-method silica (Aerosil 200 from Nippon Aerosil Co., Ltd.) in 800 g water and then adding 150 cc of 0.1 N aqueous sodium hydroxide. The resultant mixture was stirred for one 1 hour, after which it was filtered and then dried at 150 degrees C for 6 hours. The resultant solid cake was ground up and passed through a 200 mesh filter to obtain a microparticulate silica referred to hereinafter as silica C.

Silica D was prepared by adding 1.0 g calcium stearate to 30.0 g wet-method silica (Nipsil LP from Nippon Silica Kogyo KK), followed by mixing to homogeneity by stirring for 1 day at room temperature. This mixture was then heated at 180 degrees C for 2 hours.

Silica E was prepared by adding 1.0 g calcium stearate to 30.0 g dry-method silica (Aerosil 200 from Nippon Aerosil Co., Ltd.), followed by mixing to homogeneity by stirring for 1 day at room temperature. This mixture is then heated at 180 degrees C for 2 hours.

Table 1 reports the results of acid strength measurements on microparticulate hydrophilic silicas A-E in a nonpolar solvent in the presence of excess platinum-alkenylsiloxane complex prepared as described in reference Example 2. For comparison, Table 1 also reports the results of acid strength measurements on the microparticulate silicas whose $pK_a$ values had not been adjusted.

## Table 1

| microparticulate silica | $pK_a$ |
|---|---|
| silica A | 4.0 - 4.8 |
| silica B | 4.8 - 6.8 |
| silica C | 4.8 - 6.8 |
| silica D | 4.0 - 4.8 |
| silica E | 4.8 - 6.8 |
| Nipsil LP | 0.8 - 1.5 |
| Aerosil 200 | 0.8 - 1.5 |

Reference Example 2 - Preparation of platinum-vinylsiloxane complex

160 g 1,3-divinyltetramethyldisiloxane was mixed with 32.0 g hexachloroplatinic acid ($H_2PtCl_6 \cdot 6H20$), and the mixture was heated with stirring at 120 degrees C under a nitrogen current for 1 hour. The platinum black by-product was removed by filtration, and the acid was removed by washing with water to obtain a reaction product consisting of a platinum-vinylsiloxane complex. The platinum concentration in this reaction product was 4.25 wt%.

Example 1

Ten grams trimethylsiloxy-terminated polydimethylsiloxane having a viscosity of 0.02 Pa.s was mixed in each case with 1.0 g of silica A, B, C, D, or E, and for comparison with 1.0 g of Nipsil LP or Aerosil 200 (microparticulate silicas with unadjusted acid strengths). 8.4 mg of the reaction product obtained in Reference Example 2 was then added and the resultant mixture blended to homogeneity to yield a platinum-vinylsiloxane complex catalyst composition. 4.68 g of each of the catalyst compositions was then blended into an organosiloxane composition composed of 20 g dimethylvinylsiloxy-terminated polydimethylsiloxane having a viscosity of 12,000 cS ($0.01 m^2/sec$), 0.258 g methylhydrogensiloxane-dimethylsiloxane copolymer having a viscosity of 20 cS ($2 \times 10^{-5}$ $m^2/sec$) containing 0.72 weight % silicon-bonded hydrogen, and 0.0058 g phenylbutynol to afford an addition reaction curable silicone composition. A second portion of each of the catalyst compositions was stored for one month at a temperature of 50 degrees C. prior to being blended into the organosiloxane composition.

The curing activity of each of the aforementioned organosiloxane compositions was measured at 130 degrees C using a Curastometer Model III from Toyo-Baldwin Kabushiki Kaisha. These results are reported in Table 2. The results demonstrate that the present catalyst compositions did not lose their activity as a hydrosilylation reaction catalyst even after aging at 50 degrees C for 1 month.

Table 2

| | Microparticulate silica used | Curing start time (seconds) | |
| --- | --- | --- | --- |
| | | Initial | After 1 month @ 50°C |
| Composition of the invention | silica A | 25 | 26 |
| Composition of the invention | silica B | 25 | 26 |
| Composition of the invention | silica C | 26 | 27 |
| Composition of the invention | silica D | 25 | 27 |
| Composition of the invention | silica E | 26 | 27 |
| Comparison example | Silica with unadjusted acid strength - Nipsil LP | 26 | 140 |
| Comparison example | Silica with unadjusted acid strength - Aerosil 200 | 25 | 85 |

Example 2

Ten grams trimethylsiloxy-terminated polydimethylsiloxane having a viscosity of 2 x $10^{-5}$ m$^2$/sec was mixed with either 1.0 g silica A produced as described in Reference Example 1, or with 1.0 g Nipsil LP. Two platinum-vinylsiloxane complex catalyst compositions were prepared by adding and mixing 8.4 mg of the reaction product of Reference Example 2 into each of the silica dispersions. 0.0026 g of the resultant catalyst compositions was added either immediately after mixing or after aging at 50 degrees C for 1 month, to an emulsified mixture of 20 g acyloxy-terminated polypropylene oxide having a viscosity of 4,100 cS (4.1 x $10^{-3}$ m$^2$/sec), 1.08 g of the methylhydrogensiloxane-dimethylsiloxane copolymer described in Example 1, and 0.0058 g phenylbutynol, and this is mixed at high shear. The curing activities of the resulting mixtures were measured at 130 degrees C as described in Example 1. These results are reported in Table 3, wherein it is confirmed that the catalyst compositions of this invention do not lose their activity as a hydrosilylation reaction catalyst, even for non-siloxane polymers, after aging at 50 degrees C for 1 month.

Table 3

| Microparticulate silica used | Curing start time (seconds) | |
| | Initial | After aging 1 month/50°C |
| silica A | 28 | 27 (transparent after curing) |
| silica with unadjusted acid strength (Nipsil LP) | 29 | 350 (opaque after curing) |

Composition of the invention → silica A

Comparison example → silica with unadjusted acid strength (Nipsil LP)

The present catalyst compositions are characterized by excellent activity that does not vary during long-term storage. The catalyst compositions are therefore useful for compositions that cure by reaction of an organohydrogensiloxane with either organosilicon or organic compounds.

**Claims**

1. A platinum-alkenylsiloxane complex catalyst composition of
    A) 100 parts by weight of an organopolysiloxane,

B) from 1 to 100 parts by weight of a microparticulate hydrophilic silica, and

C) from 0.0001 to 100 parts by weight, as atomic platinum, of a platinum-alkenylsiloxane complex, characterized in that the $pK_a$ value of a dispersion of 100 parts by weight said silica, from 10 to 100 parts by weight, calculated as atomic platinum, of said complex, and an aprotic solvent, is within the range of from 2.0 to 9.0 inclusive and wherein said $pK_a$ value is achieved by treatment of a silica with alkaline materials or by addition of an alkaline material as a fourth component.

2. A catalyst composition according to claim 1 where said alkenylsiloxane is a divinyltetraalkyldisiloxane.

3. A catalyst composition according to claim 1 where said catalyst composition contains a liquid trimethylsiloxy terminated polydimethylsiloxane.

4. A composition according to claim 1 where said silica is treated with an alkali metal hydroxide, alkali metal silanolate, alkaline earth metal hydroxide or alkaline earth metal silanolate, or an alkali metal alcoholate or calcium stearate.

5. A composition according to claim 1 where said silica is a wet-method silica.

6. A composition according to claim 1 where said aprotic solvent is an aromatic hydrocarbon.

7. A composition according to claim 7 where said aromatic hydrocarbon is benzene.

8. A composition according to any of the preceding claims where the organopolysiloxane contains at least two silicon-bonded alkenyl radicals in each molecule and has a degree of polymerization no greater than 10.

9. Use of the platinum-alkenylsiloxane complex of any of the preceding claims in paste, plastic or dispersion form, for the hydrosilylation reaction.

**Patentansprüche**

1. Platinalkenylsiloxankomplexkatalysatorzusammensetzung aus
   A) 100 Gewichtsteilen eines Organopolysiloxans,
   B) 1 bis 100 Gewichtsteilen eines mikroteilchenförmigen hydrophilen Siliziumdioxids und
   C) 0,0001 bis 100 Gewichtsteilen, als atomares Platin, eines Platinalkenylsiloxankomplexes,
   dadurch gekennzeichnet, daß der $pK_a$-Wert einer Dispersion von 100 Gewichtsteilen des Siliziumdioxids, von 10 bis 100 Gewichtsteilen, berechnet als atomares Platin, des Komplexes und eines aprotischen Lösungsmittels im Bereich von 2,0 bis einschließlich 9,0 liegt, wobei der $pK_a$-Wert erreicht wird durch Behandlung eines Siliziumdioxids mit alkalischen Materialien oder durch Zugabe eines alkalischen Materials als vierte Komponente.

2. Katalysatorzusammensetzung nach Anspruch 1, worin das Alkenylsiloxan ein Divinyltetraalkyldisiloxan ist.

3. Katalysatorzusammensetzung nach Anspruch 1, worin die Katalysatorzusammensetzung ein flüssiges Polydimethylsiloxan mit Trimethylsiloxyendgruppen enthält.

4. Zusammensetzung nach Anspruch 1, worin das Siliziumdioxid mit einem Alkalihydroxid, Alkalisilanolat, Erdalkalihydroxid oder Erdalkalisilanolat oder einem Alkalialkoholat oder Calciumstearat behandelt wurde.

5. Zusammensetzung nach Anspruch 1, worin das Siliziumdioxid ein durch Naßverfahren hergestelltes Siliziumdioxid ist.

6. Zusammensetzung nach Anspruch 1, worin das aprotische Lösungsmittel ein aromatischer Kohlenwasserstoff ist.

7. Zusammensetzung nach Anspruch 7, worin der aromatische Kohlenwasserstoff Benzol ist.

**8.** Zusammensetzung nach einem der vorhergehenden Ansprüche, worin das Organopolysiloxan mindestens zwei siliziumgebundene Alkenylreste in jedem Molekül enthält und einen Polymerisationsgrad von nicht mehr als 10 hat.

**9.** Verwendung des Platinalkenylsiloxankomplexes nach einem der vorhergehenden Ansprüche in Pasten-, plastischer oder Dispersionsform für die Hydrosilylierungsreaktion.

**Revendications**

**1.** Une composition de catalyseur à base de complexe platine-alcénylsiloxane constituée de
A) 100 parties en poids d'un organopolysiloxane,
B) 1 à 100 parties en poids d'une silice hydrophile microparticulaire, et
C) 0,0001 à 100 parties en poids, calculées en platine atomique, d'un complexe platine-alcénylsiloxane,
caractérisée en ce que le $pK_a$ d'une dispersion de 100 parties en poids de ladite silice, de 10 à 100 parties en poids, calculées en platine atomique, dudit complexe, et d'un solvant aprotique s'inscrit dans l'intervalle de 2,0 à 9,0 inclusivement, et dans laquelle ledit $pK_a$ est atteint par traitement d'une silice avec des matières alcalines ou par addition d'une matière alcaline comme quatrième constituant.

**2.** Une composition de catalyseur selon la revendication 1, dans laquelle ledit alcénylsiloxane est un divinyltétraalkyldisiloxane.

**3.** Une composition de catalyseur selon la revendication 1, dans laquelle ladite composition de catalyseur contient un polydiméthylsiloxane liquide terminé par des motifs triméthylsiloxy.

**4.** Une composition selon la revendication 1, dans laquelle ladite silice est traitée par un hydroxyde de métal alcalin, un silanolate de métal alcalin, un hydroxyde de métal alcalino-terreux ou un silanolate de métal alcalino-terreux, ou un alcoolate de métal alcalin ou le stéarate de calcium.

**5.** Une composition selon la revendication 1, dans laquelle ladite silice est une silice préparée par voie humide.

**6.** Une composition selon la revendication 1, dans laquelle ledit solvant aprotique est un hydrocarbure aromatique.

**7.** Une composition selon la revendication 7, dans laquelle ledit hydrocarbure aromatique est le benzène.

**8.** Une composition selon l'une quelconque des revendications précédentes, dans laquelle l'organopolysiloxane contient au moins deux radicaux alcényles liés au silicium dans chaque molécule et a un degré de polymérisation non supérieur à 10.

**9.** Utilisation du complexe platine-alcénylsiloxane de l'une quelconque des revendications précédentes sous forme de pâte, matière plastique ou dispersion, pour la réaction d'hydrosilylation.